(19) Europäisches Patentamt
European Patent Office
Office européen des brevets

(11) EP 4 769 561 A1

(12) **EUROPEAN PATENT APPLICATION**
published in accordance with Art. 153(4) EPC

(43) Date of publication:
**01.07.2026 Bulletin 2026/27**

(21) Application number: **24856679.6**

(22) Date of filing: **29.07.2024**

(51) International Patent Classification (IPC):
***H01M 4/505*** (2010.01) ***H01M 4/525*** (2010.01)
***H01M 10/0567*** (2010.01) ***H01M 10/052*** (2010.01)
***H01M 10/42*** (2006.01) ***H01M 4/02*** (2006.01)

(52) Cooperative Patent Classification (CPC):
**H01M 4/02; H01M 4/505; H01M 4/525; H01M 10/052; H01M 10/0567; H01M 10/42;**
Y02E 60/10

(86) International application number:
**PCT/KR2024/011045**

(87) International publication number:
**WO 2025/042066 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.08.2023 KR 20230108942**

(71) Applicant: **SK On Co., Ltd.**
**Seoul 03161 (KR)**

(72) Inventors:
- **KIM, Seung Hyun**
**Daejeon 34124 (KR)**
- **CHO, In Haeng**
**Daejeon 34124 (KR)**
- **PARK, Ki Sung**
**Daejeon 34124 (KR)**
- **PARK, Min Woo**
**Daejeon 34124 (KR)**
- **PARK, Young Uk**
**Daejeon 34124 (KR)**
- **SHIM, Yu Na**
**Daejeon 34124 (KR)**
- **CHO, Yong Hyun**
**Daejeon 34124 (KR)**

(74) Representative: **Stolmár & Partner Patentanwälte PartG mbB**
**Blumenstraße 17**
**80331 München (DE)**

(54) **LITHIUM SECONDARY BATTERY**

(57) A lithium secondary battery according to the embodiments of the present disclosure comprises: a positive electrode comprising positive active material containing lithium metal oxide particles; a negative electrode facing the positive electrode; and a non-aqueous electrolyte solution comprising a non-aqueous organic solvent, lithium salt, and an additive containing a difluorophosphite-based compound, the molar ratio of lithium in the lithium metal oxide particles to the overall metal excluding the lithium in the lithium metal oxide particles is 1.05 or greater.

FIG. 1

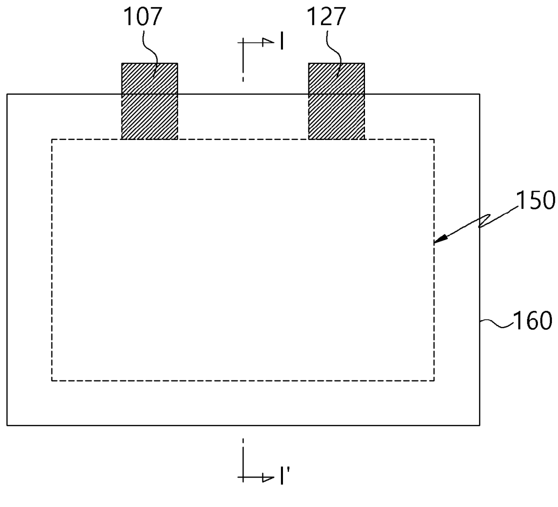




Processed by Luminess, 75001 PARIS (FR)

## Description

[TECHNICAL FIELD]

The disclosure of the present application relates to a lithium secondary battery.

[BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an hybrid vehicle.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

For example, the secondary battery may include an electrode assembly including a cathode, an anode and a separation layer (separator), and an electrolyte impregnating the electrode assembly. The secondary battery may further include a case accommodating the electrode assembly and the electrolyte.

A cathode active material of the lithium secondary battery may include a lithium-excess cathode active material in which lithium is present in a transition metal layer of a layered structure. The lithium-excess cathode active material has high capacity properties, but requires high voltage operation to cause reduced lifespan properties.

DETAILED DESCRIPTIONS OF THE INVENTION

[Technical Objective]

According to an objective of the present disclosure, there is provided a lithium secondary battery having improved capacity property and driving stability.

[Means for Resolving the Objective]

A lithium secondary battery according to example embodiments includes a cathode including a cathode active material that comprises a lithium metal oxide particle, an anode opposing the cathode, and a non-aqueous electrolyte solution including a non-aqueous organic solvent, a lithium salt, and an additive that includes a difluorophosphite-based compound, wherein a ratio of the molar number of lithium included in the lithium metal oxide particle relative to the total molar number of metals excluding lithium included in the lithium metal oxide particle is 1.05 or greater.

In some embodiments, the difluorophosphite-based compound may be represented by Chemical Formula 2 below.

[Chemical Formula 2]

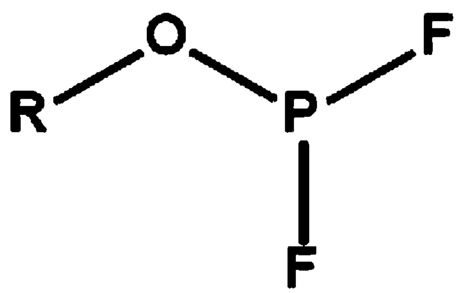

In Chemical Formula 2, R is hydrogen, a $C_1$-$C_{12}$ alkyl group, a $C_6$-$C_{14}$ aryl group, a $C_2$-$C_{12}$ alkenyl group, or a hydrocarbon including a $C_2$-$C_{12}$ alkynyl group.

In some embodiments, a content of the difluorophosphite-based compound may be in a range from 0.5 wt% to 1.5 wt% based on a total weight of the non-aqueous electrolyte solution.

In some embodiments, the non-aqueous electrolyte solution may further include an auxiliary additive including at least one selected from the group consisting of an alkyl sultone-based compound and an alkenyl sultone-based

compound.

In some embodiments, the alkyl sultone-based compound may include at least one selected from the group consisting of 1,3-propane sultone and 1,4-butane sultone.

In some embodiments, the alkenyl sultone-based compound may include at least one selected from the group consisting of ethene sultone, 1,3-propene sultone, 1,4-butene sultone and 1-methyl-1,3-propene sultone.

In some embodiments, a content of the auxiliary additive may be in a range from 1.5 wt% to 3.0 wt% based on a total weight of the non-aqueous electrolyte solution.

In some embodiments, the lithium salt may include at least one selected from the group consisting of lithium tetrafluoroborate ($LiBF_4$), lithium hexafluorophosphate ($LiPF_6$) and lithium difluorophosphate ($LiPO_2F_2$).

In some embodiments, the non-aqueous organic solvent may include a carbonate-based solvent.

In some embodiments, the carbonate solvent may include at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC) and butylene carbonate.

In some embodiments, the lithium metal oxide particle may be represented by Chemical Formula 1.

[Chemical Formula 1] $Li_a[M_xNi_yMn_z]O_b$

In Chemical Formula 1, M is at least one of Co, Na, Ca, Y, Hf, Ta, Fe, B, Si, Ba, Ra, Mg, V, Ti, Al, Ru, Zr, W, Sn, Nb, Mo, Cu, Zn, Cr, Ga, V and Bi, and $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$, and $1.8 \leq b \leq 2.2$).

In some embodiments, $1.2 \leq a/(x+y+z) \leq 1.8$ In Chemical Formula 1.

[Effects of the Invention]

According to an embodiment of the present disclosure, capacity properties of a cathode active material may be improved.

According to an embodiment of the present disclosure, life-span properties of a lithium secondary battery may be improved, and an amount of gas generation at high temperature may be reduced.

According to an embodiment of the present disclosure, a high-voltage battery of 4.5 V or higher may be realized while suppressing electrolyte decomposition and/or side reactions.

The lithium secondary battery of the present disclosure may be widely applied in green technology fields such as an electric vehicle, a battery charging station, a solar power generation, a wind power generation using batteries, and may also be used in eco-friendly electric vehicles and hybrid vehicles for preventing climate change by suppressing air pollution and greenhouse gas emission.

[Brief Descriptions of the Drawings]

FIGS. 1 and 2 are a schematic plan view and a schematic cross-sectional view, respectively, of a lithium secondary battery according to example embodiments, respectively.

[Implementation for Practicing the Invention]

Embodiments of the present disclosure provide a lithium secondary battery including a cathode, an anode and an electrolyte solution.

Hereinafter, embodiments of the present disclosure will be described in detail. However, these embodiments are merely provided as examples the present disclosure is not limited to the specific embodiments described herein.

In example embodiments, the lithium secondary battery includes the cathode, the anode opposing the cathode, and a non-aqueous electrolyte solution.

The detailed structure of the lithium secondary battery is described below with reference to FIGS. 1 and 2.

In example embodiments, the cathode includes a cathode active material including a lithium metal oxide particles that contains an excess of lithium. For example, lithium may be present in a transition metal layer of a layered structure of the lithium metal oxide particle. Accordingly, capacity properties of the cathode active material may be improved to be similar to a theoretical capacity (250 mAh/g) of the layered structure.

In example embodiments, a ratio of the molar number of lithium contained in the lithium metal oxide particle to the total molar number of metals other than lithium contained in the lithium metal oxide particle is 1.05 or greater. In the above range, lithium may be sufficiently present in the transition metal layer in addition to the lithium layer in the layered structure of the lithium metal oxide particle.

In some embodiments, the lithium metal oxide particle may be represented by Chemical Formula 1.

[Chemical Formula 1] $Li_a[M_xNi_yMn_z]O_b$

In Chemical Formula 1, M may be at least one of Co, Na, Ca, Y, Hf, Ta, Fe, B, Si, Ba, Ra, Mg, V, Ti, Al, Ru, Zr, W, Sn, Nb, Mo, Cu, Zn, Cr, Ga, V and Bi, and $0 \le x \le 0.9$, $0 \le y \le 0.9$, $x+y>0$, $0.1 \le z \le 0.9$, $1.8 \le a+x+y+z \le 2.2$, $1.05 \le a/(x+y+z) \le 1.95$, and $1.8 \le b \le 2.2$.

In some embodiments, in Chemical Formula 2, $1.2 \le a/(x+y+z) \le 1.8$. For example, a/(x+y+z) may represent the molar number of lithium contained in the lithium metal oxide particle relative to the molar number of transition metals contained in the lithium metal oxide particle.

In the a/(x+y+z) range, a sufficient amount of lithium may be present in the transition metal layer, so that capacity properties may be improved while preventing an excessive decrease in the molar number of the transition metals.

The chemical structure represented by Chemical Formula 1 represents the bonding relationship in the layered structure or the crystal structure of the lithium metal oxide particle, and does not exclude another additional element. For example, M, Ni, and Mn in Chemical Formula 1 may serve as main active elements of the cathode active material. Chemical Formula 1 is provided to express the bonding relationship of the main active elements, and is to be understood as encompassing an introduction and a substitution of the additional element.

In an embodiment, an auxiliary element may be further included to enhance chemical stability of the lithium metal oxide particle or the layered/crystal structure in addition to the main active elements. The auxiliary element may be incorporated into the layered/crystal structure to form a bond, and this case is to be understood to be included in a scope of the chemical structure represented by Chemical Formula 1.

The auxiliary element may include, e.g., at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra and P.

In example embodiments, a lithium secondary battery includes a non-aqueous electrolyte solution. For example, the non-aqueous electrolyte solution includes a non-aqueous organic solvent and a lithium salt.

For example, the cathode active material including the lithium metal oxide particle as described above may be operated at a high voltage of 4.5 V or higher. For example, the lithium metal oxide particle having the composition of Chemical Formula 1 may be activated under a high-voltage environment of 4.5 V or higher. However, when operating the lithium secondary battery in the high-voltage environment, the non-aqueous electrolyte solution may be decomposed to increase an amount of gas generation. Accordingly, life-span properties and operational stability of the lithium secondary battery may be deteriorated.

In example embodiments, the non-aqueous electrolyte includes a non-aqueous organic solvent, a lithium salt, and an additive.

In example embodiments, the non-aqueous organic solvent may further include at least one of a carbonate solvent, an ester solvent, an ether solvent, a ketone solvent, an alcohol solvent and an aprotic solvent. These may be used alone or in a combination of two or more therefrom.

For example, the carbonate solvent may include at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC) and butylene carbonate.

For example, the ester solvent may include at least one selected from the group consisting of methyl acetate (MA), ethyl acetate (EA), n-propyl acetate (n-PA), 1,1-dimethylethyl acetate (DMEA), methyl propionate (MP), ethyl propionate (EP), gammabutyrolactone (GBL), decanolide, valerolactone, mevalonolactone and caprolactone.

For example, the ether solvent may include at least one selected from the group consisting of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone solvent may include cyclohexanone, etc.

For example, the alcohol solvent may include at least one selected from the group consisting of ethyl alcohol and isopropyl alcohol.

For example, the aprotic solvent may include at least one selected from the group consisting of a nitrile-based solvent, an amide-based solvent (e.g., dimethylformamide), a dioxolane-based solvent (e.g., 1,3-dioxolane), and a sulfolane-based solvent.

In example embodiments, a lithium salt may be provided as an electrolyte. For example, the lithium salt may be represented as $Li^+X^-$.

For example, an anion (X-) of the lithium salt may be at least one selected from the group consisting of $F^-$, $Cl^-$, $Br^-$, $I^-$, $NO_3^-$, $N(CN)_2^-$, $BF_4^-$, $ClO_4^-$, $PF_6^-$, $SbF_6^-$, $AsF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$ and $PO_2F_2^-$. These may be used alone or in a combination of two or more therefrom as the anion of the lithium salt.

In some embodiments, the lithium salt may include at least one selected from the group consisting of lithium

tetrafluoroborate ($LiBF_4$), lithium hexafluorophosphate ($LiPF_6$), and lithium difluorophosphate ($LiPO_2F_2$). Accordingly, a film having improved thermal stability may be formed on an electrode surface. Thus, an ionic conductivity of the non-aqueous electrolyte solution may be enhanced while the electrode may be sufficiently protected.

In an embodiment, the lithium salt may be included in the non-aqueous organic solvent with a concentration from about 0.01 M to 5 M, or from about 0.01 M to 2 M. In the above range, transfer of lithium ions and/or electrons during the charge/discharge process of the lithium secondary battery may be promoted, thereby improving power and capacity properties.

In example embodiments, an additive of the non-aqueous electrolyte solution includes a difluorophosphite-based compound. Accordingly, oxidation resistance of the non-aqueous electrolyte solution may be improved, so that the life-span properties of the lithium secondary battery may be improved and the gas generation at high temperature may be reduced.

For example, the lithium metal oxide having the above-described composition may be used together with the difluorophosphite-based compound, so that a high-voltage battery of 4.5 V or higher may be implemented while suppressing the decomposition and/or side reactions of the electrolyte solution. Thus, the capacity, power and life-span properties of the lithium secondary battery may be improved together.

In some embodiments, the difluorophosphite-based compound may be represented by Chemical Formula 2.

[Chemical Formula 2]

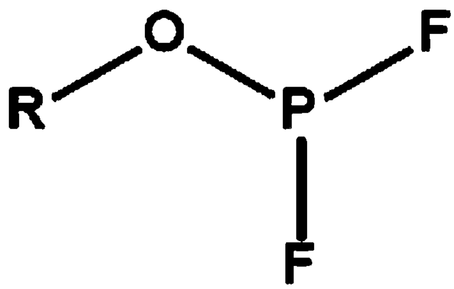

In Chemical Formula 2, R is hydrogen, a $C_1$-$C_{12}$ alkyl group, a $C_6$-$C_{14}$ aryl group, a $C_2$-$C_{12}$ alkenyl group, or a hydrocarbon including a $C_2$-$C_{12}$ alkynyl group.

For example, R may not include an alicyclic structure. Accordingly, the decomposition of the difluorophosphite-based compound may be suppressed, so that operational stability of the lithium secondary battery may be improved.

In some embodiments, R in Chemical Formula 2 may be substituted or unsubstituted.

In some embodiments, R in Chemical Formula 2 may include a substituent.

For example, the substituent included in R in the above Chemical Formula 2 may include at least one selected from the group consisting of a halogen, a $C_1$-$C_6$ alkyl group, a $C_3$-$C_6$ cycloalkyl group, a $C_1$-$C_6$ alkoxy group, a 3-7 membered heterocycloalkyl group, a $C_6$-$C_{12}$ aryl group, a 5-7 membered heteroaryl group, a hydroxy group (-OH), $-NR^4R^5$ ($R^4$ and $R^5$ are each independently hydrogen or a $C_1$-$C_6$ alkyl group), a nitro group ($-NO_2$), and a cyano group (-CN).

In some embodiments, a content of the difluorophosphite-based compound may be in a range from 0.5 wt% to 1.5 wt% based on a total weight of the non-aqueous electrolyte solution, in an embodiment, may be in a range from 0.8 wt% to 1.2 wt%. In the above range, oxidation resistance of the non-aqueous electrolyte solution may be sufficiently enhanced while preventing degradation of the life-span properties due to an excessive additive addition.

In some embodiments, the non-aqueous electrolyte solution may further include an auxiliary additive in consideration of the life-span properties and/or ionic conductivity of the non-aqueous electrolyte solution.

For example, the auxiliary additive may include at least one selected from the group consisting of an alkyl sultone-based compounds and an alkenyl sultone-based compound.

For example, the alkyl sultone-based compound may include at least one selected from the group consisting of 1,3-propane sultone (PS) and 1,4-butane sultone.

For example, the alkenyl sultone-based compound may include at least one selected from the group consisting of ethene sultone, 1,3-propene sultone (PRS), 1,4-butene sultone, and 1-methyl-1,3-propene sultone.

The auxiliary additive may further include, e.g., an anhydride-based compound such as succinic anhydride and maleic anhydride, a nitrile-based compound such as glutaronitrile, succinic acid nitrile, adiponitrile, etc. These may be used alone or in a combination of two or more therefrom in addition to the above-described sultone-based compound.

For example, the auxiliary additive may include at least one selected from the group consisting of ethylene sulfate (ESA), fluoroethylene carbonate (FEC), polyethylene sulfide (PES), vinylene carbonate (VC) and vinylethylene carbonate (VEC).

In some embodiments, a content of the auxiliary additive may be in a range from 1.5 wt% to 3.0 wt% based on the total weight of the non-aqueous electrolyte solution, in an embodiment, may be in a range from 1.8 wt% to 2.5 wt%. In the above range, the side reactions of the non-aqueous electrolyte solution may be sufficiently suppressed, while preventing degradation of the life-span properties due to the excessive additive addition.

Hereinafter, a lithium secondary battery including the cathode and the non-aqueous electrolyte solution as described above is provided with reference to FIGS. 1 and 2. For example, FIG. 2 is a cross-sectional view taken along a line I-I' of FIG. 1 in a thickness direction.

The structures illustrated in FIGS. 1 and 2 are an example provided for convenience of descriptions, and the structure of the lithium secondary battery according to embodiments of the present disclosure is not limited thereto.

Referring to FIGS. 1 and 2, the lithium secondary battery may include a cathode 100 including a cathode active material that includes the above-described lithium metal oxide particles, and an anode 130 facing the cathode 100.

The cathode 100 may include a cathode active material layer 110 formed by coating the cathode active material including the above-described lithium metal oxide particles on a cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, silver, or the like. For example, a thickness of the cathode current collector 105 may be in a range from 10 $\mu$m to 50 $\mu$m.

The cathode active material layer 110 may include the above-described cathode active material.

The cathode active material may include a plurality of the lithium metal oxide particles. For example, a total content of the lithium metal oxide particles based on a total weight of the cathode active material may be 50 wt% or more. In some embodiments, the total content of the lithium metal oxide particles based on the total weight of the cathode active material may be 60 wt% or more, 70 wt% or more, 80 wt% or more, or 90 wt% or more.

In an embodiment, the cathode active material may substantially consist of the lithium metal oxide particles.

A cathode slurry may be prepared by mixing the cathode active material in a solvent. The cathode slurry may be coated on at least one surface of the cathode current collector 105, and then dried and pressed to prepare the cathode active material layer 110. The coating may include a gravure coating, a slot die coating, a multi-layer simultaneous die coating, an imprinting, a doctor blade coating, a dip coating, a bar coating, a casting, or the like. The cathode active material layer 110 may further include a binder, and may optionally further include a conductive material, a thickener, or the like.

N-methyl-2-pyrrolidone (NMP), dimethylformamide, dimethylacetamide, N, N-dimethylaminopropylamine, ethylene oxide, tetrahydrofuran, or the like, may be used as the solvent.

The binder may include polyvinylidene fluoride (PVDF), vinylidene fluoridehexafluoropropylene copolymer, polyacrylonitrile, polymethylmethacrylate, acrylonitrilebutadiene rubber (NBR), polybutadiene rubber (BR), styrene-butadiene rubber (SBR), or the like. These may be used alone or in a combination of two or more therefrom.

In an embodiment, a PVDF-based binder may be used as a cathode binder. In this case, an amount of the binder for forming the cathode active material layer 110 may be decreased and an amount of the cathode active material may be relatively increased. Accordingly, the power and capacity properties of the secondary battery may be improved.

The conductive material may be added to enhance conductivity and/or mobility of lithium ions or electrons in the cathode active material layer 110. For example, the conductive material may include a carbon-based conductive material such as graphite, carbon black (e.g., Denka Black), acetylene black, ketjen black, graphene, a vapor-grown carbon fiber (VGCF), carbon nanotube (CNT), a carbon fiber, and/or a metal-based conductive material tin, tin oxide, titanium oxide, a perovskite material such $LaSrCoO_3$, $LaSrMnO_3$, etc. These may be used alone or in a combination of two or more therefrom.

The cathode slurry may further include a thickener and/or a dispersant. In an embodiment, the cathode slurry may include a thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a titanium foil, a nickel foam (foam), a copper foam, a polymer substrate coated with a conductive metal, or the like. These may be used alone or in a combination of two or more therefrom. For example, a thickness of the anode current collector 125 may be in a range from 10 $\mu$m to 50 $\mu$m.

The anode active material layer 120 may include an anode active material. A material capable of adsorbing and de-intercalating lithium ions may be used as the anode active material. For example, the anode active material may include a carbon-based material such as a crystalline carbon, an amorphous carbon, a carbon composite, a carbon fiber, etc.; a lithium metal; an lithium alloy; a silicon (Si)-containing material or a tin (Sn)-containing material. These may be used alone or in a combination of two or more therefrom.

The amorphous carbon may include hard carbon, soft carbon, coke, a mesocarbon microbead (MCMB), a mesophase pitch-based carbon fibers (MPCF), etc.

The crystalline carbon may include graphite-based carbon such as natural graphite, artificial graphite, a graphitized coke, a graphitized MCMB, a graphitized MPCF, etc.

The lithium metal may include a pure lithium metal and/or a lithium metal having a protective layer for inhibiting a dendrite growth, etc. In an embodiment, a lithium metalcontaining layer deposited or coated on the anode current collector 125 may be used as the anode active material layer 120. In an embodiment, a lithium thin film may be used as the anode active material layer 120.

Elements included in the lithium alloy include aluminum, zinc, bismuth, cadmium, antimony, silicon, lead, tin, gallium, indium, etc. These may be used alone or in a combination of two or more therefrom.

The silicon-containing material may provide more increased capacity properties. The silicon-containing material may include Si, SiOx ($0<x<2$), a metal-doped SiOx ($0<x<2$), a silicon-carbon composite, or the like.

The metal may include lithium and/or magnesium, and the metal-doped SiOx ($0<x<2$) may include a metal silicate.

An anode slurry may be prepared by mixing the anode active material in a solvent. The anode slurry may be coated/deposited on the anode current collector 125, and then dried and pressed to prepare the anode active material layer 120. The coating may include, e.g., a gravure coating, a slot die coating, a multi-layer simultaneous die coating, an imprinting, a doctor blade coating, a dip coating, a bar coating, a casting, etc. The anode active material layer 120 may further include a binder, and may optionally further include a conductive material, a thickener, or the like.

The solvent included in the anode slurry may include water, pure water, deionized water, distilled water, ethanol, isopropanol, methanol, acetone, n-propanol, t-butanol, or the like. These may be used alone or in a combination of two or more therefrom.

The above-described materials that may be used in the preparation of the cathode 100 may be used as the binder, the conductive material, and the thickener.

In some embodiments, a styrene-butadiene-rubber (SBR)-based binder, carboxymethyl cellulose (CMC), a polyacrylic acid-based binder, a poly(3,4-ethylenedioxythiophene)(PEDOT)-based binder, or the like, may be used as the anode binder. These may be used alone or in a combination of two or more therefrom. In example embodiments, a separator 140 may be interposed between the cathode 100 and the anode 130. The separator 140 may be configured to prevent an electrical short circuit between the cathode 100 and the anode 130 and to generate a flow of ions. For example, a thickness of the separator may be in a range from 10 $\mu$m to 20 $\mu$m.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, an ethylene/methacrylate copolymer, or the like. These may be used alone or in a combination of two or more therefrom.

The porous nonwoven fabric may contain a glass fiber with a high melting point, a polyethylene terephthalate fibers, etc.

The separator 140 may include a ceramic-based material. For example, inorganic particles may be coated on the polymer film or dispersed in the polymer film to improve heat resistance.

The separator 140 may have a single-layered structure or a multi-layered structure including the polymer film and/or the nonwoven fabric as described above.

In example embodiments, an electrode cell may be defined by the cathode 100, the anode 130 and the separator 140, and a plurality of the electrode cells may be stacked to form, e.g., the electrode assembly 150 in the form of a jelly roll. For example, the electrode assembly 150 may be formed by winding, stacking, z-folding, stack-folding, or the like, of the separator 140.

As illustrated in FIGS. 1 and 2, electrode tabs (a cathode tab and an anode tab) may protrude from each of the cathode current collector 105 and the anode current collector 125 included in the electrode cells, and may extend to one side of the case 160. The electrode tabs may be fused together with the one side of the case 160 to form an electrode lead (a cathode lead 107 and an anode lead 127) extending or being exposed to an outside of the case 160.

For example, the lithium secondary battery may be fabricated in a cylindrical type using a can, a prismatic type, a pouch type, or a coin type.

Hereinafter, embodiments of the present disclosure will be further described with reference to specific experimental examples. Examples and comparative examples included in the experimental examples provides merely examples of the present disclosure and do not limit the appended claims. It is clear to those skilled in the art that various changes and modifications to embodiments are possible within the scope of the present disclosure and technical ideas, and such changes and modifications are included in the scope of the appended claims.

Example 1

(1) Preparation of cathode active material

Distilled water from which dissolved oxygen was removed was introduced into a sealed reactor, and $NiSO_4 \cdot 6H2O$ and $MnSO_4 \cdot H2O$ were added in a molar ratio of 38.1:61.9.

NaOH and $NH_4OH$ as a precipitating agent were further added to the reactor, and a coprecipitation reaction was performed for 60 hours to prepare metal hydroxide particles.

The metal hydroxide particles were dried at 100°C for 12 hours.

The dried metal hydroxide particles and lithium hydroxide were introduced into a dry mixer to prepare a mixture.

A mixing ratio of the metal hydroxide particles and the lithium hydroxide was adjusted such that a composition measured by an inductively coupled plasma (ICP) analysis of the prepared lithium metal oxide particles satisfied $Li_{1.11}Ni_{0.34}Mn_{0.55}O_2$.

The ICP analysis was performed using a device of Agilent's 5800 ICP-OES.

The mixture was placed in a firing furnace, and a temperature of the firing furnace was increased to 250°C at 2°C/min and maintained at 250°C for 3 hours (a primary firing).

After the primary firing, the temperature of the firing furnace was increased to 850°C at a rate of 2°C/min, and a secondary firing was performed while maintaining the temperature at 850°C for 8 hours.

During the primary firing and the secondary firing, oxygen gas was continuously passed through the firing furnace at 10 mL/min.

After the completion of the firing, the fired product was naturally cooled to room temperature, pulverized and classified to prepare lithium metal oxide particles.

$Li_{1.11}Ni_{0.34}Mn_{0.55}O_2$ was confirmed by performing an ICP analysis in which the number of oxygen atoms for the lithium metal oxide particles was normalized as two.

The produced lithium metal oxide particles were used as a cathode active material.

(2) Preparation of non-aqueous electrolyte solution

A 1.0 M $LiPF_6$ solution was prepared using a mixed solvent of EC/EMC/DEC (25:45:30; volume ratio). To the prepared 1.0 M LiPF6 solution, 1.0 wt% of phosphorodifluoridous acid, pentyl ester (represented by Chemical Formula 3) was added as an additive based on a total weight of the non-aqueous electrolyte solution, and 1.0 wt% of FEC, 0.5 wt% of PS, 0.3 wt% of PRS and 0.5 wt% of ESA (a total content of the auxiliary additive: 2.3 wt%) were added as an auxiliary additive to prepare a non-aqueous electrolyte solution.

[Chemical Formula 3]

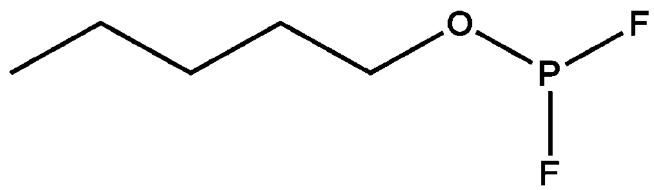

(3) Fabrication of lithium secondary battery

A lithium secondary battery was fabricated using the cathode active material and the non-aqueous electrolyte solution as prepared above.

Specifically, the cathode active material, Denka Black as a conductive material, and PVDF as a binder were mixed in a mass ratio of 93:5:2, respectively, to prepare an cathode slurry. The cathode slurry was coated on an aluminum current collector (thickness: 15 μm), vacuum-dried at 130°C, and then pressed to prepare an cathode.

A lithium metal having a thickness of 15 μm was used as an anode.

The cathode and the anode manufactured as described above were notched and stacked in a circular shape having diameters of Φ 14 and Φ 16, respectively, and an electrode cell was formed with a separator (polyethylene, thickness of 13 μm) notched with Φ 19 interposed between the cathode and the anode. Φ N (N is a positive number) may represent a circular shape having a diameter of N mm.

The electrode cell was put in a coin cell exterior material having a dimension (CR2016) of a diameter of 20 mm and a height of 1.6 mm, the electrolyte solution was injected and assembled, and the electrode was aged for 12 hours or more so that the electrolyte solution impregnated an inside of the electrode.

The above-fabricated lithium secondary battery was charged and discharged (charging conditions: CC-CV 1C 4.6V 0.05C CUT-OFF, discharging conditions: CC 1C 2.0V CUT-OFF).

Examples 2 to 7

Cathode active materials, non-aqueous electrolyte solution and lithium secondary batteries were prepared by the same method as that in Example 1, except that contents of phosphorodifluoridous acid, pentyl ester were adjusted as shown in Table 1 based on a total weight of the non-aqueous electrolyte solution.

Example 8

A cathode active material, a non-aqueous electrolyte solution and a lithium secondary battery were prepared by the same method as that in Example 1, except that 0.5 wt% of FEC, 0.3 wt% of PS, 0.3 wt% of PRS and 0.3 wt% of ESA (a total content of an auxiliary additive: 1.4 wt%) were added as the auxiliary additive.

Example 9

A cathode active material, a non-aqueous electrolyte solution and a lithium secondary battery were prepared by the same method as that in Example 1, except that 1.5 wt% of FEC, 0.7 wt% of PS, 0.4 wt% of PRS and 0.5 wt% of ESA (a total content of the auxiliary additive: 3.1 wt%) were added as the auxiliary additive.

Example 10

A cathode active material, a non-aqueous electrolyte solution and a lithium secondary battery were prepared by the same method as that in Example 1, except that input amounts of LiOH·H2O, NiSO4·6H2O, CoSO4·7H2O and MnSO4·H2O were controlled so that a composition of the lithium metal oxide particles became $Li_{1.19}Ni_{0.21}Co_{0.02}Mn_{0.58}O_2$.

Comparative Example 1

A cathode active material, a non-aqueous electrolyte solution and a lithium secondary battery were manufactured by the same method as that in Example 1, except that phosphorodifluoridous acid, pentyl ester were not added to the non-aqueous electrolyte solution.

Comparative Example 2

A solution was prepared by mixing $NiSO_4$, $CoSO_4$ and $MnSO_4$ in a molar ratio of 75:10:15 in distilled water bubbled with N2 for 24 hours to remove dissolved oxygen. The solution was introduced into a reactor at 55° C, and NaOH and $NH_3H_2O$ were introduced as a precipitating agent and a chelating agent, and coprecipitation reaction was performed for 36 hours to obtain metal hydroxide particles as a transition metal precursor. The transition metal precursor was dried at 80 °C for 12 hours, and then further dried at 110 °C for 12 hours.

Lithium hydroxide and the transition metal precursor were added to a dry high-speed mixer in a molar ratio of 1.05:1, and uniformly mixed for 5 minutes. The mixture was placed in a firing furnace, and the temperature was increased to 930°C at a rate of 2°C/min, and the mixture was fired at 930°C for 10 hours.

Oxygen was continuously passed at a flow rate of 10 mL/min during the heating and firing. Natural cooling was carried out to room temperature after the firing was completed, and a lithium-transition metal composite oxide particle having a composition of $LiNi_{0.75}Co_{0.10}Mn_{0.15}O_2$ was prepared by a pulverization and a classification.

A cathode active material, a non-aqueous electrolyte solution and a lithium secondary battery were prepared by the same method as that in Example 1, except that the above-prepared lithium-transition metal composite oxide particles were used as the cathode active material.

Comparative Example 3

A cathode active material, a non-aqueous electrolyte solution and a lithium secondary battery were prepared by the same method as that in Comparative Example 2, except that phosphorodifluoridous acid, pentyl ester was not added to the non-aqueous electrolyte solution.

Comparative Example 4

A cathode active material, a non-aqueous electrolyte solution and a lithium secondary battery were prepared by the same method as that in Example 1, except that input amounts of $LiOH \cdot H_2O$, $NiSO_4 \cdot 6H_2O$ and $MnSO_4 \cdot H_2O$ were

controlled so that a composition of lithium metal oxide particles became $Li_{1.02}Ni_{0.38}Mn_{0.60}O_2$.

The composition of the cathode active material (chemical formula), a ratio (Li/Me) of the number of moles of lithium included in the lithium metal oxide particles relative to the total number of moles of metals except for lithium included in the lithium metal oxide particles, the content of the additive based on the total weight of the non-aqueous electrolyte solution, and the content of the auxiliary additive based on the total weight of the non-aqueous electrolyte solution are shown in Table 1 below.

[Table 1]

| category | cathode active material | | non-aqueous electrolyte solution | |
|---|---|---|---|---|
| | composition (chemical formula) | Li/Me | content of additive (wt%) | content of auxiliary additive (wt%) |
| Example 1 | $Li_{1.11}Ni_{0.34}Mn_{0.55}O_2$ | 1.25 | 1.0 | 2.3 |
| Example 2 | $Li_{1.11}Ni_{0.34}Mn_{0.55}O_2$ | 1.25 | 0.5 | 2.3 |
| Example 3 | $Li_{1.11}Ni_{0.34}Mn_{0.55}O_2$ | 1.25 | 0.7 | 2.3 |
| Example 4 | $Li_{1.11}Ni_{0.34}Mn_{0.55}O_2$ | 1.25 | 1.2 | 2.3 |
| Example 5 | $Li_{1.11}Ni_{0.34}Mn_{0.55}O_2$ | 1.25 | 1.5 | 2.3 |
| Example 6 | $Li_{1.11}Ni_{0.34}Mn_{0.55}O_2$ | 1.25 | 0.4 | 2.3 |
| Example 7 | $Li_{1.11}Ni_{0.34}Mn_{0.55}O_2$ | 1.25 | 1.6 | 2.3 |
| Example 8 | $Li_{1.11}Ni_{0.34}Mn_{0.55}O_2$ | 1.25 | 1.0 | 1.4 |
| Example 9 | $Li_{1.11}Ni_{0.34}Mn_{0.55}O_2$ | 1.25 | 1.0 | 3.1 |
| Example 10 | $Li_{1.19}Ni_{0.21}Co_{0.02}Mn_{0.58}0_2$ | 1.47 | 1.0 | 2.3 |
| Comparative Example 1 | $Li_{1.11}Ni_{0.34}Mn_{0.55}O_2$ | 1.25 | 0 | 2.3 |
| Comparative Example 2 | $LiNi_{0.75}Co_{0.10}Mn_{0.15}O_2$ | 1.00 | 1.0 | 2.3 |
| Comparative Example 3 | $LiNi_{0.75}Co_{0.10}Mn_{0.15}O_2$ | 1.00 | 0 | 2.3 |
| Comparative Example 4 | $Li_{1.02}Ni_{0.38}Mn_{0.60}O_2$ | 1.04 | 1.0 | 2.3 |

## Experimental Example

### (1) Evaluation on capacity retention - 45°C

Charging (CC-CV 1C 4.6V 0.05C CUT-OFF) and discharging (CC 1C 2.0V CUT-OFF) of the lithium secondary batteries manufactured according to the above-described Examples and Comparative Examples were repeated 50 times in a chamber at 45°C.

A capacity retention was calculated as a percentage of a discharge capacity measured at the 50th cycle divided by a discharge capacity measured at the 1st cycle.

$$\text{capacity retention (\%)} = (\text{50th discharge capacity} / \text{1st discharge capacity}) \times 100$$

### (2) Measurement of gas generation - 45°C

The lithium secondary battery manufactured according to each of Examples and Comparative Examples were charged (CC-CV 1C 4.6V 0.05C CUT-OFF) and left in a chamber at 45°C for 8 weeks. Thereafter, the lithium secondary battery was left at room temperature for 30 minutes and put into a chamber for measuring an amount of gas generation.

After forming a vacuum in the chamber, nitrogen gas was filled to form an atmospheric pressure, and a nitrogen volume ($V_0$) at the atmospheric pressure and an internal pressure ($P_0$) of the chamber were measured.

After forming a vacuum again in the chamber, the lithium secondary battery was pierced and left for 1 hour. Thereafter, after measuring an internal pressure ($P_1$) of the chamber, the amount of gas generation was measured by substituting the values into the following equation.

$$\text{amount on gas generation (mL)} = (V_0/P_0)*P_1$$

(3) Measurement of initial discharge capacity

Charging (CC-CV 0.1C 4.6V 0.05C CUT-OFF) and discharging (CC 0.1C 2.0V CUT-OFF) were performed once on the lithium secondary battery manufactured according to each of Examples and Comparative Examples to measure an initial discharge capacity.

The initial discharge capacity is defined as a value obtained by dividing an absolute capacity (mAh) of the lithium secondary battery by a total weight (g) of the cathode active material in the battery.

The evaluation results are shown in Table 2 below.

[Table 2]

| category | capacity retention (45 °C) (%, 50cyc) | amount of gas generation (45 °C) (mL) | initial discharge capacity (mAh/g) |
|---|---|---|---|
| Example 1 | 80.1 | 10.3 | 210 |
| Example 2 | 77.6 | 12.5 | 211 |
| Example 3 | 78.9 | 11.0 | 213 |
| Example 4 | 81.5 | 9.2 | 210 |
| Example 5 | 82.0 | 8.6 | 208 |
| Example 6 | 74.7 | 18.1 | 211 |
| Example 7 | 76.9 | 15.3 | 213 |
| Example 8 | 76.3 | 15.6 | 210 |
| Example 9 | 75.9 | 17.2 | 211 |
| Example 10 | 80.3 | 10.8 | 246 |
| Comparative Example 1 | 40.5 | 92.5 | 210 |
| Comparative Example 2 | 78.5 | 16.4 | 128 |
| Comparative Example 3 | 44.1 | 105.3 | 131 |
| Comparative Example 4 | 77.9 | 15.0 | 140 |

Referring to Tables 1 and 2, in Examples using the non-aqueous electrolyte solution including the difluorophosphite-based compound, the amount of gas generation in a high voltage environment was reduced and the capacity retention was improved compared to those from Comparative Examples.

In Examples, the cathode active material including excess lithium was used to increase the initial discharge capacity.

In Example 6 where the content of the difluorophosphite-based compound was less than 0.5 wt% based on the total weight of the non-aqueous electrolyte solution, oxidation resistance was reduced compared to those from other Examples, and the capacity retention was lowered and the amount of gas generation was increased.

In Example 7 where the content of the difluorophosphite-based compound was greater than 1.5 wt% based on the total weight of the non-aqueous electrolyte solution, side reactions of the electrolyte solution were increased and life-span properties were degraded compared to those from other Example.

In Example 8 where the content of the auxiliary additive based on the total weight of the non-aqueous electrolyte solution was less than 1.5 wt%, the capacity retention was lowered and the amount of gas generation was increased compared to those from other Examples.

In Example 9 where the content of the auxiliary additive was greater than 3.0 wt% based on the total weight of the non-aqueous electrolyte solution, the life-span properties were degraded compared to those from other Examples.

In Comparative Example 4 where the ratio of moles of lithium included in the lithium metal oxide particles relative to the total moles of metals except for lithium included in the lithium metal oxide particles was less than 1.05, an amount of lithium present in a layered transition metal layer was reduced and the initial capacity was reduced.

## Claims

1. A lithium secondary battery, comprising:

   a cathode comprising a cathode active material that comprises a lithium metal oxide particle;
   an anode opposing the cathode; and
   a non-aqueous electrolyte solution comprising a non-aqueous organic solvent, a lithium salt, and an additive that comprises a difluorophosphite-based compound,
   wherein a ratio of the molar number of lithium included in the lithium metal oxide particle relative to the total molar number of metals excluding lithium included in the lithium metal oxide particle is 1.05 or greater.

2. The lithium secondary battery of claim 1, wherein the difluorophosphite-based compound is represented by Chemical Formula 2 below:

[Chemical Formula 2]

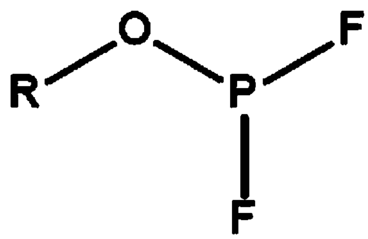

3. The lithium secondary battery of claim 1, wherein a content of the difluorophosphite-based compound is in a range from 0.5 wt% to 1.5 wt% based on a total weight of the non-aqueous electrolyte solution.

4. The lithium secondary battery of claim 1, wherein the non-aqueous electrolyte solution further comprises an auxiliary additive comprising at least one selected from the group consisting of an alkyl sultone-based compound and an alkenyl sultone-based compound.

5. The lithium secondary battery of claim 4, wherein the alkyl sultone-based compound comprises at least one selected from the group consisting of 1,3-propane sultone and 1,4-butane sultone.

6. The lithium secondary battery of claim 4, wherein the alkenyl sultone-based compound comprises at least one selected from the group consisting of ethene sultone, 1,3-propene sultone, 1,4-butene sultone and 1-methyl-1,3-propene sultone.

7. The lithium secondary battery of claim 4, wherein a content of the auxiliary additive is in a range from 1.5 wt% to 3.0 wt% based on a total weight of the non-aqueous electrolyte solution.

8. The lithium secondary battery of claim 1, wherein the lithium salt comprises at least one selected from the group consisting of lithium tetrafluoroborate ($LiBF_4$), lithium hexafluorophosphate ($LiPF_6$) and lithium difluorophosphate ($LiPO_2F_2$).

9. The lithium secondary battery of claim 1, wherein the non-aqueous organic solvent comprises a carbonate-based solvent.

10. The lithium secondary battery of claim 9, wherein the carbonate solvent comprises at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC) and butylene carbonate.

11. The lithium secondary battery of claim 1, wherein the lithium metal oxide particle is represented by Chemical Formula 1:

[Chemical Formula 1] $Li_a[M_xNi_yMn_z]O_b$

(In Chemical Formula 1, M is at least one of Co, Na, Ca, Y, Hf, Ta, Fe, B, Si, Ba, Ra, Mg, V, Ti, Al, Ru, Zr, W, Sn, Nb, Mo, Cu, Zn, Cr, Ga, V and Bi, and $0 \le x \le 0.9$, $0 \le y \le 0.9$, $x+y>0$, $0.1 \le z \le 0.9$, $1.8 \le a+x+y+z \le 2.2$, $1.05 \le a/(x+y+z) \le 1.95$, and $1.8 \le b \le 2.2$).

**12.** The lithium secondary battery of claim 11, wherein $1.2 \le a/(x+y+z) \le 1.8$.

FIG. 1

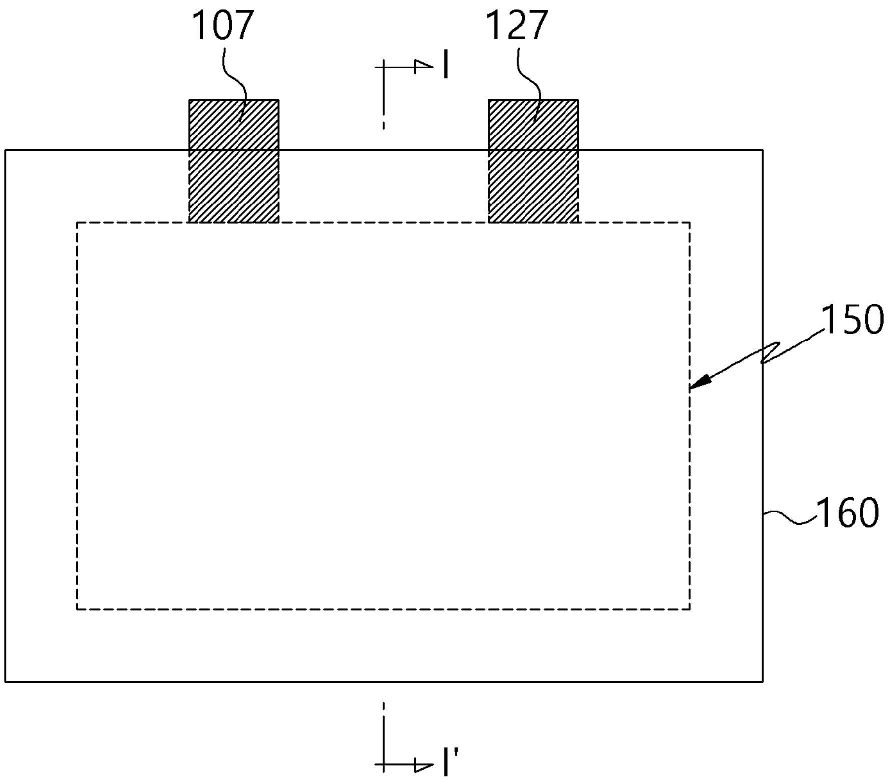


FIG. 2

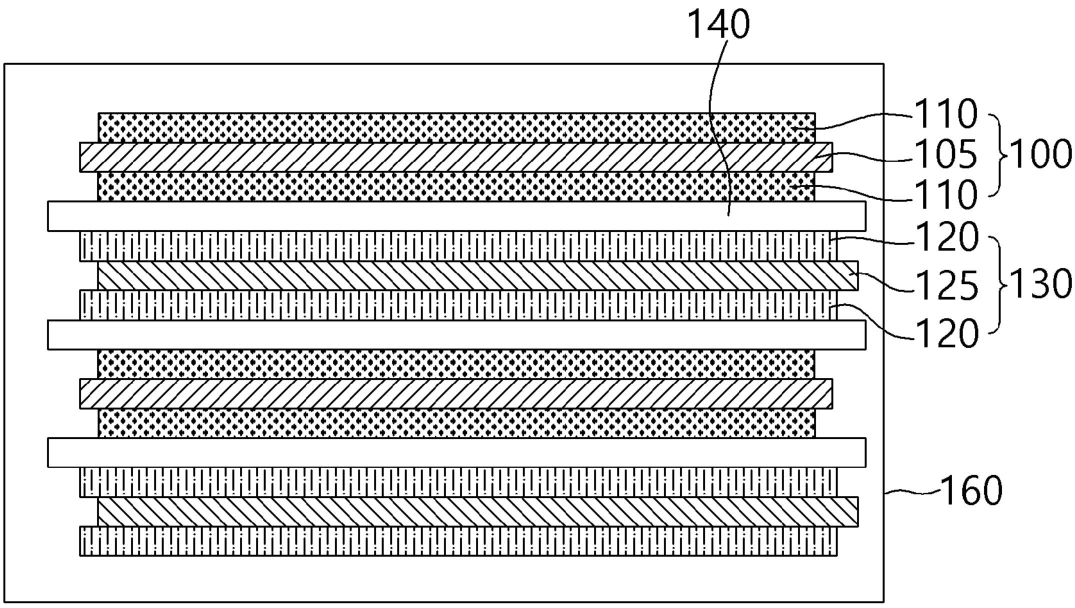

## INTERNATIONAL SEARCH REPORT

International application No.
**PCT/KR2024/011045**

**A. CLASSIFICATION OF SUBJECT MATTER**

**H01M 4/505**(2010.01)i; **H01M 4/525**(2010.01)i; **H01M 10/0567**(2010.01)i; **H01M 10/052**(2010.01)i; **H01M 10/42**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/505(2010.01); H01M 10/052(2010.01); H01M 10/0525(2010.01); H01M 10/0567(2010.01); H01M 10/0569(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 활물질(active material), 유기용매(organic solvent), 디플루오로인산염(difluorophosphate), 비수전해액(non-aqueous electrolyte), 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0082813 A (SK ON CO., LTD.) 09 June 2023 (2023-06-09)<br>See claims 1, 7 and 10, paragraphs [0093]-[0097], [0114]-[0118] and [0161], and table 1. | 1-12 |
| A | JP 2023-518592 A (LG ENERGY SOLUTION LTD.) 02 May 2023 (2023-05-02)<br>See claims 1, 5, 8 and 10. | 1-12 |
| A | CN 116093430 A (JIUJIANG TINCI ADVANCED MATERIALS CO., LTD.) 09 May 2023 (2023-05-09)<br>See claims 1 and 4-7. | 1-12 |
| A | KR 10-2023-0100270 A (SK ON CO., LTD.) 05 July 2023 (2023-07-05)<br>See claims 1, 3, 9 and 11. | 1-12 |
| A | KR 10-2023-0117929 A (SK ON CO., LTD.) 10 August 2023 (2023-08-10)<br>See claims 1-3, 12 and 13. | 1-12 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/011045**

| Patent document cited in search report | Publication date (day/month/year) | Patent family member(s) | Publication date (day/month/year) |
|---|---|---|---|
| KR 10-2023-0082813 A | 09 June 2023 | CN 116230919 A | 06 June 2023 |
| | | EP 4191706 A2 | 07 June 2023 |
| | | EP 4191706 A3 | 16 August 2023 |
| | | US 2023-0178814 A1 | 08 June 2023 |
| JP 2023-518592 A | 02 May 2023 | CN 115336071 A | 11 November 2022 |
| | | EP 4109620 A1 | 28 December 2022 |
| | | KR 10-2022-0048542 A | 20 April 2022 |
| | | KR 20220048542 A | 20 April 2022 |
| | | US 2023-0352735 A1 | 02 November 2023 |
| | | WO 2022-080669 A1 | 21 April 2022 |
| CN 116093430 A | 09 May 2023 | CN 116093430 B | 24 November 2023 |
| | | WO 2024-093659 A1 | 10 May 2024 |
| KR 10-2023-0100270 A | 05 July 2023 | CN 116365041 A | 30 June 2023 |
| | | EP 4210146 A2 | 12 July 2023 |
| | | EP 4210146 A3 | 09 August 2023 |
| | | US 2023-0207880 A1 | 29 June 2023 |
| KR 10-2023-0117929 A | 10 August 2023 | DE 102023102627 A1 | 03 August 2023 |
| | | US 2023-0246234 A1 | 03 August 2023 |

Form PCT/ISA/210 (patent family annex) (July 2022)